# EUROPEAN PATENT APPLICATION

(11) **EP 4 379 866 A1**
(43) Date of publication of application: **05.06.2024**
(21) Application number: 22848605.6
(22) Date of filing: 27.07.2022
(51) Int. Cl.: H01M 4/62

(54) **CORE-SHELL POSITIVE ELECTRODE LITHIUM-SUPPLEMENTING ADDITIVE, PREPARATION METHOD THEREFOR AND APPLICATION THEREOF**

(30) Priority: 30.07.2021 CN 202110883742; 30.07.2021 CN 202110884597
(71) Applicant: Shenzhen Innovazone Technology Co., Ltd., Shenzhen, Guangdong 518000 (CN)
(72) Inventor: WAN, Yuanxin, Shenzhen, Guangdong 518000 (CN); PEI, Xianyinan, Shenzhen, Guangdong 518000 (CN); WANG, Yaxiong, Shenzhen, Guangdong 518000 (CN); KONG, Lingyong, Shenzhen, Guangdong 518000 (CN); ZHAO, Zhongke, Shenzhen, Guangdong 518000 (CN); ZHONG, Zeqin, Shenzhen, Guangdong 518000 (CN); ZHONG, Wen, Shenzhen, Guangdong 518000 (CN); REN, Wangbao, Shenzhen, Guangdong 518000 (CN)
(74) Representative: Di Giovine, Paolo
(86) International application number: PCT/CN2022/108374
(87) International publication number: WO 2023/006000

(57) **Abstract**

The present application discloses a core-shell cathode lithium-supplementing additive, a preparation method therefor, and an application thereof. The core-shell cathode lithium-supplementing additive of the present application comprises a core body and a coating layer covering the core body, the coating layer being an isolating conductive packaging layer, the core body containing a lithium-supplementing material, and the lithium-supplementing material comprising Li_{2+c}A_{c}B_{1-c} and/or LiₐX_{b}, wherein 0 ≤ c ≤ 1, A is at least one of N and P, B is at least one of S and O, 1 ≤ a ≤ 3, 1 ≤ b ≤ 3, and X is any one selected from F, S, N, B, P, O, and Se. The lithium-supplementing material contained in the core-shell cathode lithium-supplementing additive of the present application is rich in lithium, thereby increasing the Coulombic efficiency and improving the overall electrochemical performance of a battery. The coating layer can improve lithium removal and moisture isolation during a charging process. The preparation method therefor can ensure the stability in the structure and electrochemical performance of the prepared core-shell cathode lithium-supplementing additive.

## Description

This application claims the benefit of Chinese patent applications No. 202110884597.0, titled "CORE-SHELL CATHODE LITHIUM-SUPPLEMENTING ADDITIVE, PREPARATION METHOD THEREFOR AND APPLICATION THEREOF", and No. 202110883742.3, titled "CORE-SHELL BINARY CATHODE LITHIUM-SUPPLEMENTING ADDITIVE, PREPARATION METHOD THEREFOR AND APPLICATION THEREOF", filed with the Chinese patent office on July 30, 2021, the contents of all of the aforementioned applications, including any intervening amendments thereto, are incorporated herein by reference.

### TECHNICAL FIELD

The present application relates to the field of lithium-ion batteries, and in particular, relates to a core-shell cathode lithium-supplementing additive, a preparation method therefor and an application thereof.

### BACKGROUND

The oil energy crisis in the 1960s and 1970s forced people to look for new alternative energy sources. Lithium-ion batteries are considered to be one of the most promising energy sources with due to their high operating voltage and energy density, relatively low self-discharge level, no memory effect, no heavy metal pollution such as lead and cadmium, and ultra-long cycle life.

During the first charging process of a lithium-ion battery, the surface of the anode is usually accompanied by the formation of a solid electrolyte interphase (SEI) film. This process consumes a large amount of Li⁺ and converts a large amount of active lithium into lithium carbonate, lithium fluoride and alkyl lithium. The loss of lithium in the cathode material means that part of the Li⁺ released from the cathode material is irreversibly consumed, corresponding to a reduction in the reversible specific capacity of the battery cell, thereby reducing the first Coulombic efficiency and battery capacity of the battery.

The first charge consumes approximately 10% of the lithium source. When using anode materials with high specific capacity, such as anodes of alloys (silicon, tin, etc.), oxides (silicon oxide, tin oxide) and amorphous carbon, the anode materials, especially silicon-based anode materials, will further consume Li⁺, the consumption of the cathode lithium source will also be further intensified, resulting in a low initial Coulombic efficiency.

In order to further improve the energy density of lithium-ion batteries, presupplementing lithium to the cathode or anode is an effective method. The current anode lithium-supplementing materials have the following defects: they are highly active and incapable of long-term stable storage, which increases the difficulty of operation and production risks. Therefore, the cathode lithium supplementing process, which is relatively safer and easier to operate, has received increasing attention.

Although currently, the commonly used lithium-supplementing materials have high lithium content and some lithium-supplementing materials have certain stability in the air, the electronic conductivity and ion conductivity of these lithium-supplementing materials are generally low, and the electrochemical decomposition potential of pure lithium-supplementing components such as LiF can reach 6.1 V, which is much higher than the cut-off voltage of existing cathode materials (4.4 V). This hinders the deintercalation of lithium ions during the charging process of the cathode, and the decomposition of LiF will produce toxic gas F₂. Therefore, there remains a challenge to overcome these shortcomings in lithium-supplementing components.

In order to overcome these shortcomings of commonly used lithium supplementing materials, there are currently public reports of cathode lithium-supplementing materials. For example, in a known cathode lithium supplementing material, LiF particles are doped with metals and the surface of the LiF particles is coated with a carbon layer.

However, research has found that although these cathode lithium-supplementing materials are helpful in improving the electronic conductivity of lithium-supplementing components such as LiF particles, they still hinder the deintercalation of lithium ions during the charging process of the cathode. The ionic conductivity is low and the electronic conductivity is not ideal. Moreover, the purity is not high, and the material interface lacks passivation layer for protection, thus it is prone to reaction with moisture in the environment to re-form LiOH. Due to the low purity and poor interface stability, the storage stability and processing stability of existing cathode lithium-supplementing materials are unsatisfying, and the lithium supplement effect is not ideal, the capacity needs to be improved, and it is not easy to mass-produce. The above-mentioned conventional cathode lithium-supplementing materials have limited irreversible specific gram capacity. As a result, a larger amount of lithium supplementing additives is required, occupying the proportion of the cathode active material and indirectly lowering the energy density.

### TECHNICAL PROBLEMS

In order to overcome the above-mentioned deficiencies of the existing technology and provide a core-shell cathode lithium-supplementing additive and a preparation method therefor and an application thereof, so as to solve problems in the existing cathode lithium-supplementing additive such as difficulty in lithium deintercalation, low ion conductivity, and unsatisfactory storage stability and processing stability.

### TECHNICAL PROPOSALS

In order to achieve the above objects, an aspect of the present application provides a core-shell cathode lithium-supplementing additive. The core-shell cathode lithium-supplementing additive of the present application includes a core body and a coating layer covering the core body, the coating layer is an isolating conductive packaging layer, the core body contains a lithium-supplementing material, and the lithium-supplementing material includes Li_{2+c}A_{c}B_{1-c} or/and LiₐX_{b}; where, 0 ≤ c ≤ 1, A is at least one of N and P, and B is at least one of S and O.

Further, the core body is a primary particle or /and a secondary particle; a particle size of the primary particle is 50 nm-500 nm, and a particle size of the secondary particle is 0.1 µm-10 µm.

Further, the Li_{2+c}A_{c}B_{1-c} includes at least one of Li₂O, Li₂S, Li₃N, LisP, Li_{2+c}O_{c}S_{1-c}, Li_{2+c}N_{c}P_{1-c}, Li_{2+c}N_{c}S_{1-c}, Li_{2+c}N_{c}O_{1-c}, Li_{2+c}P_{c}S_{1-c}, and Li_{2+c}P_{c}O_{1-c}.

Further, the lithium-supplementing material is Li_{2+c}A_{c}B_{1-c}, and a mass content of the lithium-supplementing material in the core-shell cathode lithium-supplementing additive is 90%-99%.

Further, the LiₐX_{b} includes at least one of LiF, Li₂S, Li₃N, LisB, Li₂O, LisP, and Li₂Se.

Further, the lithium-supplementing material is LiₐX_{b}, and a mass content of the lithium-supplementing material in the core-shell cathode lithium-supplementing additive is 70%-90%.

Further, the isolating conductive packaging layer includes at least one layer of a conductive carbon layer and a conductive oxide layer.

Further, a total mass of the isolating conductive packaging layer accounts for 1 %-10% of a mass of the core-shell cathode lithium-supplementing additive.

Further, a total thickness of the isolating conductive packaging layer is 1 nm-100 nm.

Further, the lithium-supplementing material is LiₐX_{b}, and the isolating conductive packaging layer includes the conductive carbon layer, and the conductive carbon layer directly covers a surface of the core body.

Further, the isolating conductive packaging layer also includes another conductive coating layer, and the another conductive coating layer covers an outer surface of the conductive carbon layer.

Further, the conductive carbon layer is a graphite coating layer.

Further, a thickness of the conductive carbon layer is 5 nm-20 nm.

Further, the another conductive coating layer includes another conductive carbon layer and/or conductive oxide layer.

Further, a material of the conductive carbon layer includes at least one of graphene, carbon nanotubes, amorphous carbon, graphite and carbon black.

Further, a material of the conductive oxide layer includes at least one of In₂O₃, ZnO, and SnO₂.

Further, the isolating conductive packaging layer includes a conductive carbon layer, and a Raman spectrum of the core-shell cathode lithium-supplementing additive has scattering peaks at wavelengths of 1330 cm⁻¹ and 1580 cm⁻¹, intensities of the scattering peaks at the wavelengths of 1330 cm⁻¹ and 1580 cm⁻¹ are recorded as I_{D} and I_{G}, respectively, and I_{D} and I_{G} satisfy: I_{D}/I_{G} < 5.0.

Another aspect of the present application provides a preparation method for a core-shell cathode lithium-supplementing additive. The preparation method for a core-shell cathode lithium-supplementing additive of the present application includes the following steps:
preparing particles containing a lithium-supplementing material, and the lithium-supplementing material of the particles containing the lithium-supplementing material includes Li_{2+c}A_{c}B_{1-c} or/and LiₐX_{b}; where, 0 ≤ c ≤ 1, A is at least one of N and P, B is at least one of S and O, 1 ≤ a ≤ 3, 1 ≤ b ≤ 3, and X is any one selected from F, S, N, B, P, O, and Se; and
forming an isolating conductive packaging layer on a surface of the particles containing the lithium-supplementing material to obtain a core-shell cathode lithium-supplementing additive.

Further, the method of forming the isolating conductive packaging layer on the surface of the particles containing the lithium-supplementing material includes a step of forming at least one layer of a conductive carbon layer and a conductive oxide layer on the surface of the particles containing the lithium-supplementing material.

Further, the lithium-supplementing material is LiₐX_{b}, the isolating conductive packaging layer includes a conductive carbon layer, and the preparation method for a core-shell cathode lithium-supplementing additive includes the following steps:
performing a heat treatment on a mixture including elemental lithium and a carbon compound containing element X in a protective atmosphere, so that the elemental lithium and the carbon compound undergo a substitution reaction to generate the lithium-supplementing material and the conductive carbon layer covering the lithium-supplementing-material in situ, so as to obtain the core-shell cathode lithium-supplementing additive.

Further, the carbon compound includes at least one of CS₂, CO₂, CF₄, and C₂F₄.

Further, a temperature of the heat treatment is 250°C-700°C.

Further, the carbon compound is in a gaseous state, and is in contact with the elemental lithium at a certain flow rate to undergo the heat treatment.

Further, the method also includes depositing another conductive coating layer on an outer surface of the conductive carbon layer.

Further, a flow rate of the carbon compound in a gaseous state is 10 sccm-100 sccm.

Yet another aspect of the present application provides a cathode lithium-supplementing additive. The cathode lithium-supplementing additive of the present application includes the core-shell cathode lithium-supplementing additive of the present application, or a core-shell cathode lithium-supplementing additive prepared by the method for preparing a core-shell cathode lithium-supplementing additive of the present application.

Yet another aspect of the present application provides a cathode material. The cathode material of the present application includes the core-shell cathode lithium-supplementing additive of the present application, or a core-shell cathode lithium-supplementing additive prepared by the method for preparing a core-shell cathode lithium-supplementing additive of the present application, or the cathode lithium-supplementing additive of the present application.

Yet another aspect of the present application provides a cathode. The cathode of the present application includes a current collector and a cathode active layer bonded to a surface of the current collector, the cathode active layer includes a cathode active material, a lithium-supplementing additive, a binder and a conductive agent; the lithium-supplementing additive includes the core-shell cathode lithium-supplementing additive or a core-shell cathode lithium-supplementing additive prepared by the method for preparing a core-shell cathode lithium-supplementing additive of the present application, or the cathode lithium-supplementing additive of the present application.

Further, a content of the lithium-supplementing additive in the cathode active layer is 0.1 wt%-10 wt%.

Further, a content of the conductive agent in the cathode active layer is 0.1 wt%-30 wt%.

Further, a content of the binder in the cathode active layer is 0.1 wt%-30 wt%.

Yet another aspect of the present application provides a lithium battery. The lithium battery of the present application includes a cathode, which is the cathode of the present application.

### ADVANTAGEOUS EFFECTS

The advantageous effects of the present application in comparison to the existing technologies are as follows:

The lithium-supplementing material contained in the core-shell cathode lithium-supplementing additive of the present application is rich in lithium and can provide abundant lithium, so that it can be used as a "sacrificial agent" during the first cycle of charging to release as much lithium ions as possible at once, so as to compensate for the irreversible lithium ions consumption by the formation of the SEI film on the anode, thereby maintaining sufficient lithium ions in the battery system and improving the first cycle efficiency and overall electrochemical performance of the battery. Moreover, the additive contains an isolating conductive packaging layer covering the core body, which can effectively improve the electron and ion conductivity of the lithium-supplementing material in the core body, improve the deintercalation of lithium during the charging process, and also isolate moisture and improve the stability of the core-shell cathode lithium-supplementing additive, thereby achieving a stable lithium supplement effect. Moreover, during or after the lithium supplement process, the isolating conductive packaging layer can act as a conductive agent for conduction in the electrode system, while ensuring the structural stability of the internal lithium-supplementing material after reactions, preventing collapse of the structure.

The method for preparing a core-shell cathode lithium-supplementing additive of the present application forms an isolating conductive packaging layer on the surface of the lithium-supplementing material, so that the isolating conductive packaging layer can be coated in situ on the surface of the core body containing the lithium-supplementing material, thereby allowing the prepared core-shell cathode lithium-supplementing additive to be rich in lithium with high purity, high capacity and lithium supplementing effect, as well as good storage stability and processing stability. In addition, the method for preparing a core-shell cathode lithium-supplementing additive can ensure that the prepared core-shell cathode lithium-supplementing additive has stable structure and electrochemical performance, high efficiency, thereby saving production costs.

Since the cathode lithium-supplementing additive and cathode material of the present application contain the core-shell cathode lithium-supplementing additive of the present application, the cathode lithium-supplementing additive and cathode material as a lithium source can be used a "sacrificial agent" during the first cycle of charging and discharging process, to compensate for the irreversible lithium ions consumption by the formation of the SEI film on the anode, thereby maintaining sufficient lithium ions in the battery system and improving the first cycle efficiency and overall electrochemical performance of the battery.

Since the lithium-ion battery of the present application contains the core-shell cathode lithium-supplementing additive of the present application, the cathode has good cycle performance and low internal resistance, thus the lithium-ion battery of the present application has excellent initial Coulombic efficiency, battery capacity and cycle performance, long cycle life, and stable electrochemical performance.

### BRIEF DESCRIPTION OF THE DRAWINGS

In order to more clearly illustrate the technical proposals in embodiments of the present application, accompanying drawings that are used in the description of the embodiments or exemplary existing technologies are briefly introduced hereinbelow. Apparently, the drawings in the following description are merely some embodiments of the present application. For those skilled in the art, other drawings can also be obtained according to these drawings without any creative effort.
FIG. 1 is a schematic structural diagram of the core-shell cathode lithium-supplementing additive according to an embodiment of the present application;
FIG. 2 is a schematic structural diagram of the core-shell cathode lithium-supplementing additive with the core body being a secondary particle according to an embodiment of the present application;
FIG. 3 is a schematic structural diagram of the core-shell cathode lithium-supplementing additive, in which the isolating conductive packaging layer includes a conductive carbon layer according to the embodiment of the present application;
FIG. 4 is an SEM image of the LNP material in Example 1 of the present application;
FIG. 5 is an SEM image of the LN in Example 1 of the present application;
FIG. 6 is the XRD pattern of the LNP in Example 1 of the present application;
FIG. 7 is the Raman spectrum of the LNP in Example 1 of the present application;
FIG. 8 shows the charge and discharge curves of Experimental Group 1 to Experimental Group 3 and Comparative Group 1;
FIG. 9 shows the X-ray diffraction (XRD) and scanning electron microscope (SEM) of Li₂S@C provided in Example A7, where image a is the XRD pattern of Li₂S@C, and image b is the SEM image of Li₂S@C.

The reference signs in the drawings are as follows.
10-core body of the core-shell cathode lithium-supplementing additive;
20-isolating conductive packaging layer of the core-shell cathode lithium-supplementing additive; 21-conductive carbon layer, and 22-other conductive coating layer.

### DETAILED DESCRIPTION OF THE EMBODIMENTS

In order to more clearly understand the technical problems, technical proposals, and advantageous effects of the present application, the present application will be described in further detail hereinbelow with reference to the embodiments. It should be understood that the detailed embodiments described herein are merely to explain the present application, but not to limit the present application.

In the present application, the term "and/or", which describes the relationship between related objects, means that there can be three relationships, for example, A and/or B, which can represent circumstances that A exists alone, A and B exist at the same time, and B exists alone, where A and B may be singular or plural. The character "/" generally indicates that the associated objects are in an "or" relationship.

In the present application, "at least one" means one or more, and "a plurality of" means two or more. "At least one item below" or similar expressions refer to any combination of these items, including any combination of single item or plural items. For example, "at least one of a, b, or c" can mean: a, b, c, a-b (i.e., a and b), a-c, b-c, or a-b-c, where a, b, and c may be singular or plural respectively.

It should be understood that, in various embodiments of the present application, the numbers of the above-mentioned processes do not imply the sequence of execution, some or all of the steps may be executed in parallel or sequentially, and the execution sequence of each process should be based on its functions and determined by the internal logic, and should not constitute any limitation on the implementation process of the embodiments of the present application.

The terms used in the embodiments of the present application are merely for the purpose of describing specific embodiments, and are not intended to limit the present application. Unless clearly dictated otherwise, the singular forms "a", "the" and "said" as used in the embodiments of the present application and the appended claims intended to include the plural forms as well.

The weight of the relevant compositions mentioned in the examples of the present application can not only refer to the specific content of each composition, but also represent the proportional relationship between the weights of the compositions. It is within the scope disclosed in the embodiments of the present application that the content of the compositions is proportionally scaled up or down. Specifically, the mass described in the description of the embodiments of the present application may be a mass unit known in the chemical field, such as µg, mg, g, and kg.

The terms "first" and "second" are merely used for descriptive purposes to distinguish objects such as substances from each other, and cannot be understood as indicating or implying relative importance or implying the number of indicated technical features. For example, without departing from the scope of the embodiments of the present application, "the first" may also be referred to as "the second", and similarly, "the second" may also be referred to as "the first". Thus, a feature defined as "first" or "second" may expressly or implicitly include one or more of the features.

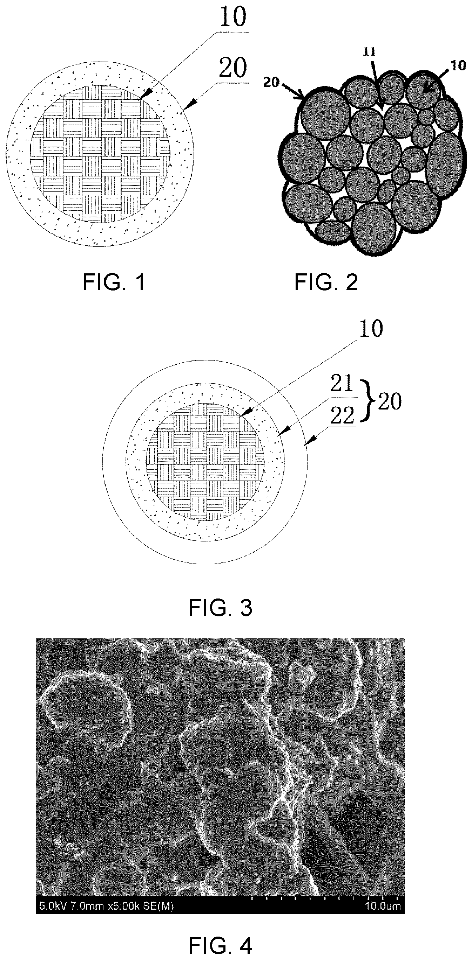

In an aspect, an embodiment of the present application provides a core-shell cathode lithium-supplementing additive. The structures of core-shell cathode lithium-supplementing additive of the embodiment of the present application are as shown in FIGS. 1 to 3, which is a core-shell material including a core body 10 and an isolating conductive packaging layer 20 covering the core body 10.

The core body 10 contained in the core-shell cathode lithium-supplementing additive in the embodiment of the present application includes a lithium-supplementing material, and the lithium-supplementing material has a molecular formula of Li_{2+c}A_{c}B_{1-c} or LiₐX_{b}; in the molecular formula Li_{2+c}A_{c}B_{1-c}, 0 ≤ c ≤ 1, A is at least one of N and P, and B is at least one of S and O; and in the molecular formula LiₐX_{b}, 1 ≤ a ≤ 3, 1 ≤ b ≤ 3, and X is any one selected from F, S, N, B, P, O, and Se.

Since the core body 10 contains the lithium-supplementing material, and the lithium-supplementing material is rich in lithium and can provide abundant lithium, so that it can be used as a "sacrificial agent" during the first cycle of charging to release as much lithium ions at once as possible, to compensate for the irreversible lithium ions consumption caused by the formation of the SEI film on the anode, thereby maintaining sufficient lithium ions in the battery system and improving the first cycle efficiency and overall electrochemical performance of the battery.

In the embodiments, when the lithium-supplementing material includes the above molecular formula Li_{2+c}A_{c}B_{1-c}, based on the elements indicated by A and B, in a specific embodiment, the lithium-supplementing material of Li_{2+c}A_{c}B_{1-c} includes at least one of Li₂O, Li₂S, Li₃N, LisP, Li_{2+c}O_{c}S_{1-c}, Li_{2+c}N_{c}P_{1-c}, Li_{2+c}N_{c}S_{1-c}, Li_{2+c}N_{c}O_{1-c}, Li_{2+c}P_{c}S_{1-c}, and Li_{2+c}P_{c}O_{1-c}. These lithium-supplementing materials have high lithium content and good stability.

The mass content of the lithium-supplementing material Li_{2+c}A_{c}B_{1-c} in the core body 10 in the core-shell cathode lithium-supplementing additive is 90%-99%, preferably 96%-98%. In specific embodiments, the content of lithium-supplementing materials may be typical but non-limiting contents such as 90%, 91%, 92%, 93%, 94%, 95%, 96%, 97%, 98%, 99% and the like. By controlling and optimizing the content of the lithium-supplementing material, the lithium-supplementing function of the core body 10, specifically the lithium-supplementing material, can be fully utilized, thereby maintaining sufficient lithium ions in the battery system and improving the first cycle efficiency and overall electrochemical performance of the battery.

In an embodiment, when the lithium-supplementing material includes the above-mentioned molecular formula LiₐX_{b}, based on the element indicated by X, in specific embodiments, the lithium-supplementing material LiₐX_{b} includes at least one of LiF, Li₂S, Li₃N, LisB, LisP, and Li₂Se. These lithium-supplementing materials have high lithium content and good stability.

In an embodiment, mass content of the lithium-supplementing material LiₐX_{b} in the core body 10 in the core-shell cathode lithium-supplementing additive is 80%-88%. In specific embodiments, the mass content of the lithium-supplementing material may be a typical but not limiting content such as 70%, 70%, 75%, 80%, 85%, 88%, 90%, etc. By controlling and optimizing the content of the lithium-supplementing material, the lithium-supplementing function of the lithium-supplementing material in the core body 10 can be fully utilized, thereby maintaining sufficient lithium ions in the battery system and improving the first cycle efficiency and overall electrochemical performance of the battery.

In addition, the core body 10 in various embodiments may be a primary particle, as shown in FIG. 1. In specific embodiments, the particle size of the primary particles is 50 nm-500 nm, and further is 50 nm-250 nm. In specific embodiments, the particle size of the primary particles may be typical but non-limiting particle sizes such as 50 nm, 100 nm, 150 nm, 200 nm, 250 nm, 300 nm, 350 nm, 400 nm, 450 nm, 500 nm, etc. The core body 10 may also be a secondary particle. In the embodiment of the present application, the secondary particle is understood to be an agglomerated particle formed by aggregation of primary particles, as shown in FIG. 2. In specific embodiments, the particle size of the secondary particle is 0.1 µm-10 µm, and further is 0.1 µm-5 µm. In specific embodiments, the particle size of the secondary particle may be a typical but non-limiting particle size such as 0.1 µm, 0.5 µm, 1 µm, 2 µm, 3 µm, 4 µm, 5 µm, 6 µm, 7 µm, 8 µm, 9 µm, 10 µm, etc. By controlling the particle size of the core body 10, on the one hand, the content of the lithium-supplementing material in the core-shell cathode lithium-supplementing additive can be controlled, thereby optimizing the lithium-supplementing effect of the core-shell cathode lithium-supplementing additive; on the other hand, by combining with the isolating conductive packaging layer 20, the overall particle size of the core-shell cathode lithium-supplementing additive can be controlled.

In a further embodiment, when the core body 10 is a secondary particle, the core body 10 also contains pores 11. In the embodiment, the aperture of the pore 11 is 1 nm-200 nm. In specific embodiments, the aperture of the pore 11 may be a typical but non-limiting aperture such as 1 nm, 10 nm, 20 nm, 30 nm, 40 nm, 50 nm, 60 nm, 70 nm, 80 nm, 90 nm, 100 nm, 150 nm, 200 nm, etc. The porosity of the pores 11 is 0.1%-30%. In specific embodiments, the porosity of the pores 11 may be a typical but non-limiting porosity such as 0.1%, 0.5%, 1%, 5%, 10%, 15%, 20%, 25%, 30% etc. The pores provided in the core body 10 are beneficial to the infiltration of the electrolyte and the transportation of lithium ions, and are also helpful for the storage of gas generated after the reaction of the lithium-supplementing additive.

In addition, the core body 10 may also be mixed particles of the above-mentioned primary particle and secondary particle.

In the embodiment of the present application, the isolating conductive packaging layer 20, namely the isolating conductive packaging layer, contained in the core-shell cathode lithium-supplementing additive covers the core body 10 containing the lithium-supplementing material. Such that, the isolating conductive packaging layer 20 can effectively improve the electron and ion conductivity of the lithium-supplementing material in the core body 10, enhance the deintercalation of lithium during the charging process, and also isolate moisture, and improve the stability of the core-shell cathode lithium-supplementing additive to achieve stable lithium supplementing effect. Moreover, during or after the lithium supplementing process, the isolating conductive packaging layer 20 can serve as a conductive agent and continue to perform conductive functions in the electrode system, while ensuring structural stability of the internal lithium-supplementing material after the reactions, avoiding collapse of the structure.

In the embodiment, the isolating conductive packaging layer 20 includes at least one of a conductive carbon layer and a conductive oxide layer. In specific embodiments, the material of the conductive carbon layer includes at least one of graphene, carbon nanotubes, amorphous carbon, graphite and carbon black. For example, when the material of the conductive carbon layer includes amorphous carbon, then the conductive carbon layer is an amorphous carbon coating layer. In another specific embodiment, the material of the conductive oxide layer includes at least one of In₂O₃, ZnO, and SnO₂.

The isolating conductive packaging layer 20 formed by these materials further improves the electron and ion conductivity of the lithium-supplementing material in the core body 10, improves the deintercalation of lithium and the isolation of moisture during the charging process, and improves the stability of the core-shell cathode lithium-supplementing additive to achieve stable lithium supplementing effect.

When the lithium-supplementing material in the core body 10 includes the above-mentioned molecular formula LiₐX_{b}. In an embodiment, as shown in FIG. 3, the isolating conductive packaging layer 20 includes a conductive carbon layer 21, and the conductive carbon layer 21 directly covers the surface of the core body 10. Such that, the isolating conductive packaging layer 20 can effectively improve the electron and ion conductivity of the lithium-supplementing material in the core body 10 and the deintercalation of lithium during the charging process. It can also isolate moisture and improve stability of the core-shell cathode lithium-supplementing additive to achieve stable lithium supplementing effect.

In the embodiment, the conductive carbon layer 21 in the isolating conductive packaging layer 20 is a graphite coating layer. The conductive carbon layer 21 provided as a graphite coating layer is beneficial to improving the electron transport of the overall material.

In the embodiment, the thickness of the conductive carbon layer 21, such as the graphite coating layer, is 5 nm-20 nm, further 5 nm-10 nm. In a specific embodiment, the thickness of the conductive carbon layer 21 may be a typical but not-limiting thickness such as 5 nm, 5.5 nm, 6 nm, 6.5 nm, 7 nm, 7.5 nm, 8 nm, 8.5 nm, 9 nm, 9.5 nm, 10 nm, etc. By controlling the thickness of the conductive carbon layer 21, such as the graphene layer, the above-mentioned function of the conductive carbon layer 21 can be further improved.

In a further embodiment, the isolating conductive packaging layer 20 also includes another conductive coating layer 22. The another conductive coating layer 22 covers the outer surface of the conductive carbon layer 21. The conductive carbon layer 21 and the conductive coating layer 22 form a composite coating structure. Adding a conductive coating layer 22 on the outer surface of the conductive carbon layer 21 can improve the above-mentioned function of the isolating conductive packaging layer 20. Specifically, it can further improve the electron and ion conductivity of the lithium-supplementing material in the core body 10, enhance the deintercalation of lithium during the charging process. It can also isolate moisture to a certain extent, improving the stability of the core-shell cathode lithium-supplementing additive and achieving a stable lithium supplementing effect.

In embodiments, another conductive coating layer 22 includes another conductive carbon layer and/or conductive oxide layer. Specifically, it may be another single conductive carbon layer, a single conductive oxide layer, or a composite coating layer of another conductive carbon layer and a conductive oxide layer coating on the outer surface of the conductive carbon layer 21. In specific embodiments, the material of another conductive carbon layer includes at least one of carbon nanotubes, amorphous carbon, graphite and carbon black. In another specific embodiment, the material of the conductive oxide layer includes at least one of In₂O₃, ZnO, SnO₂. Another conductive coating layer 22 formed by these materials further enhances its synergistic effect with the conductive carbon layer 21, further improves the electron and ion conductivity of the lithium-supplementing material in the core body 10, and is conducive to the deintercalation of lithium during the charging process. It can also isolate moisture, improving the stability of the core-shell cathode lithium-supplementing additive and achieving a stable lithium supplementing effect. The conductive oxide coating layer 22 is a good supplement to the conductive carbon layer 21, which is conducive to better contact between the conductive carbon layer 21 and the core body to exert its conductive effect; at the same time, the coating layer 22 can provide protection to the conductive layer 21, preventing peeling of the conductive layer 21.

In the embodiment, the total thickness of the isolating conductive packaging layer 20 is 1 nm-100 nm, and further 2 nm-20 nm. In specific embodiments, the total thickness of the isolating conductive packaging layer 20 may be a typical but not-limiting thickness such as 1 nm, 2 nm, 10 nm, 20 nm, 30 nm, 40 nm, 50 nm, 55 nm, 60 nm, 65 nm, 70 nm, 75 nm, 80 nm, 85 nm, 90 nm, 95 nm, 100 nm, etc. In other embodiments, the total mass of the isolating conductive packaging layer 20, namely the isolating conductive packaging layer, accounts for 1%-10% of the mass of the core-shell cathode lithium-supplementing additive. In specific embodiments, the content of the isolating conductive packaging layer 20 may be a typical but non-limiting content such as 1%, 2%, 3%, 4%, 5%, 6%, 7%, 8%, 9%, 10%, etc. By controlling and optimizing the thickness and content of the isolating conductive packaging layer 20 so that it cooperates with the core body 10, the particle size of the core-shell cathode lithium-supplementing additive is controlled and adjusted. In addition, the above-mentioned functions of the isolating conductive packaging layer 20, the electron and ion conductivity of the lithium-supplementing material in the core body 10, the lithium deintercalation of the core-shell cathode lithium-supplementing additive during the charging process and the stability of the core-shell cathode lithium-supplementing, are improved, achieving a stable lithium supplementing effect.

In addition, the core-shell cathode lithium-supplementing additive in the above embodiments may be a primary particle, that is, a single particle formed by the core body 10 and the isolating conductive packaging layer 20, alternatively it may be a secondary particle, that is, a particle formed by agglomeration of single particles of the core body 10 and the isolating conductive packaging layer 20. In the embodiment, when the core-shell cathode lithium-supplementing additive is a secondary particle, the particle size thereof is 0.1 µm-10 µm, preferably, 0.1 µm-5 µm; when the core-shell cathode lithium-supplementing additive is a primary particle, the particle size thereof is 50 nm-500 nm, preferably 50 nm-250 nm. In a specific embodiment, when the isolating conductive packaging layer 20 is a graphene layer, the particle size of the core-shell cathode lithium-supplementing additive is 0.1 µm-5 µm.

As in the embodiment, when the lithium-supplementing material contained in the above core-shell cathode lithium-supplementing additive includes LiₐX_{b} and the isolating conductive packaging layer includes the conductive carbon layer, the particle size of the core-shell cathode lithium-supplementing additive is 50 nm-3 µm. In a specific embodiment, when the isolating conductive packaging layer 20 is the conductive carbon layer 21, the particle size of the core-shell cathode lithium-supplementing additive is 0.1 µm-5 µm, and further, the particle size is such that D10/D5 ≥ 0.1, and D90/D50 ≤ 3. The inventor found that when the particles of the core-shell cathode lithium-supplementing additive are too small, the specific surface area thereof is too large so that the activity is high, which can easily cause performance failure and degradation; when the particles of the core-shell cathode lithium-supplementing additive are too large, the lithium-ion migration path is long, which will cause problems such as kinetic polarization and insufficient capacity. Therefore, the particle size of the core-shell cathode lithium-supplementing additive in the above range can enable the core-shell cathode lithium-supplementing additive to fully exert its above-mentioned functions such as lithium supplement and high capacity, and improve dispersibility thereof.

After testing, when the isolating conductive packaging layer 20 is a carbon coating layer, the Raman spectrum analysis of the core-shell cathode lithium-supplementing additive in each of the above embodiments shows that in the Raman spectrum of the core-shell cathode lithium-supplementing additive, there are scattering peaks at wavelengths of 1330 cm⁻¹ and 1580 cm⁻¹, and the intensities of the scattering peaks at the wavelengths of 1330 cm⁻¹ and 1580 cm⁻¹ are recorded as I_{D} and I_{G} respectively. In the embodiments, when I_{D} and I_{G} satisfy: I_{D}/I_{G} < 5.0, and further when I_{D}/I_{G} < 2.0, the core-shell cathode lithium-supplementing additive has excellent conductivity, and the surface layer of the core-shell cathode lithium supplementing additive has few pores and high density, and is not prone to water absorption during storage, allowing the core-shell cathode lithium-supplementing additive to have stable performance. The inventor further found that when I_{D}/I_{G} increases, for example, being greater than 5.0, and further greater than 2.0, the core-shell cathode lithium-supplementing additive shows a decrease in conductivity, with more pores on the surface layer, and the material is difficult to store and prone to absorb water in ordinary environments, leading to a decrease in performance.

Correspondingly, an embodiment of the present application also provides a preparation method for the above-mentioned core-shell cathode lithium-supplementing additive. The preparation method for the core-shell cathode lithium-supplementing additive in the embodiment of the application includes the following steps S01-S02:
in step S01: particles containing a lithium-supplementing material are prepared;
in step S02: an isolating conductive packaging layer is formed on the surface of particles containing the lithium-supplementing material to obtain a core-shell cathode lithium-supplementing additive.

The particles containing the lithium-supplementing material in step S01 are the core bodies 10 contained in the above core-shell cathode lithium-supplementing additive. Therefore, the lithium-supplementing material particles containing the lithium-supplementing material in step S01 includes the above-mentioned Li_{2+c}A_{c}B_{1-c} and LiₐX_{b}. The Li_{2+c}A_{c}B_{1-c} is as the Li_{2+c}A_{c}B_{1-c} contained in the above-mentioned core body 10 of the core-shell cathode lithium-supplementing additive, and the LiₐX_{b} is as the LiₐX_{b} contained in the above-mentioned core body 10 of the core-shell cathode lithium-supplementing additive.

The particles containing the lithium-supplementing material in step S01 may be prepared according to the type of the lithium-supplementing material contained therein. For example, in an embodiment, metal lithium is placed in an atmosphere furnace, with continuous introduction of nitrogen gas, and the temperature is raised from room temperature to 100°C-800°C, preferably 150°C-400°C, held at a constant temperature for 6 hrs-24 hrs, preferably 8 hrs-16 hrs, to obtain Li₃N (LN) particles.

As in another embodiment, lithium metal is placed in a tube furnace and heated to 300°C -500°C, with introduction of oxygen, and Li₂O is generated from lithium and oxygen, and the obtained Li₂O particles are ball milled to control the particle size.

As in another embodiment, lithium flakes and naphthalene are dissolved in a solvent of tetrahydrofuran to obtain an organolithiation reagent of naphthalene lithium, and then an appropriate amount of red phosphorus and the above reagent are added to a polytetrafluoroethylene liner, and the solvent is heated and reacted at 100°C for 2 hrs-10 hrs to obtain LisP, which is then subjected to wet ball milling and filtration.

The particle size of the particles containing the lithium-supplementing material prepared in step S01 is within the range of that of the core body 10 of the above core-shell cathode lithium-supplementing additive.

In step S02, the method for forming an isolating conductive packaging layer on the surface of particles containing the lithium-supplementing material may be prepared by a corresponding method according to the layer structure and material type of the isolating conductive packaging layer. For example, the isolating conductive packaging layer may be prepared by carbon source coating followed by carbonization treatment, magnetron sputtering or atomic layer deposition.

In the embodiments, the method for forming an isolating conductive packaging layer on the surface of particles containing the lithium supplementary material includes the method in at least one of the following embodiments.

In a specific embodiment, the particles containing the lithium-supplementing material are evenly mixed with a carbon source, the carbon source being at least one of glucose, sucrose, starch, polyethylene glycol, graphene, carbon nanotubes, graphite and carbon black, and the mixture is placed in an atmosphere furnace with continuously introduction of nitrogen gas, the temperature is raised from room temperature to 600°C-800°C, and held at a constant temperature for 2 hrs-6 hrs to form a packaging conductive carbon layer.

In another specific embodiment, conductive oxide is deposited on the outer surface of particles containing the lithium-supplementing material by using magnetron sputtering or atomic layer deposition, the conductive oxide layer (the conductive oxide) includes at least one of In₂O₃, ZnO, and SnO₂) to form a packaging conductive oxide layer.

In addition, in the step of forming the isolating conductive packaging layer, the above-mentioned carbon source coating followed by carbonization treatment and magnetron sputtering or atomic layer deposition may be combined to form an isolating conducting packaging layer with a single or multi-layer composite layer structure.

Therefore, the above-mentioned preparation method of the core-shell cathode lithium-supplementing additive forms an isolating conductive packaging layer on the surface of the lithium-supplementing material, so that the isolating conductive packaging layer can be coated in situ on the surface of the core body containing the lithium-supplementing material, so that the prepared core-shell cathode lithium-supplementing additive is rich in lithium, having high purity, high capacity and good lithium supplementing effect as well as good storage stability and processing stability. In addition, the method for preparing the core-shell cathode lithium-supplementing additive can ensure that the prepared core-shell cathode lithium-supplementing additive has stable structure and electrochemical performance, high efficiency, and saves production costs.

In the embodiment, when the lithium-supplementing material is LiₐX_{b} and the isolating conductive packaging layer includes a conductive carbon layer, the method for preparing the core-shell cathode lithium-supplementing additive includes the following steps.

A mixture including elemental lithium and a carbon compound containing element X is heat-treated in a protective atmosphere, so that the elemental lithium and the carbon compound undergo a substitution reaction to generate a binary lithium-supplementing material LiₐX_{b} and an in-situ coating of a conductive carbon layer on the lithium-supplementing material LiₐX_{b}.

By directly heat-treating a mixture of elemental lithium and a carbon compound containing element X, the substitution reaction between elemental lithium and the carbon compound is promoted. During the heat treatment process, the elemental lithium melts, and the carbon compound contacts the melted elemental lithium, and a substitution reaction occurs. The carbon contained in the carbon compound is substituted to form a core body of a binary lithium-supplementing material containing LiₐX_{b}, namely the core body 10 contained in the above-mentioned core-shell cathode lithium-supplementing additive, the generated carbon is coated in situ on the surface of the core body of the binary lithium-supplementing material containing LiₐX_{b}, thereby forming a conductive carbon layer, which is the above conductive carbon layer 21 of the isolating conductive packaging layer 20 contained in the core-shell cathode lithium-supplementing additive.

The carbon compound of element X should be the element X in the binary lithium-supplementing material with the molecular formula LiₐX_{b}. Therefore, in embodiments, the carbon compound includes at least one of CS₂, CO₂, CF₄, and C₂F₄.

The heat treatment should be at a temperature that allows the substitution reaction between elemental lithium and the carbon compound. For example, in the embodiment, the heat treatment temperature is 250°C-700°C, and further 300°C-600°C. In specific embodiments, the heat treatment temperature may be a typical and not-limiting temperature such as 250°C, 300°C, 350°C, 400°C, 450°C, 500°C, 550°C, 600°C, 650°C, 700°C, etc. The heat treatment temperature range allows the substitution reaction between elemental lithium and the carbon compound to fully react to generate a core-shell cathode lithium-supplementing additive. Based on the temperature of the heat treatment, the duration of the heat treatment should be sufficient to at least allow the substitution reaction to fully take place, e.g. 2 hrs-4 hrs.

In addition, the mixing ratio of elemental lithium to the carbon compound is ideally mixed according to the molar ratio in the chemical equation of the substitution reaction between the two, so that the elemental lithium and the carbon compound can fully take place, reducing the impurity content of the target product of core-shell cathode lithium-supplementing additive, and improving its purity.

For example, when the carbon compound is CS₂, during the heat treatment process, the substitution reaction with elemental lithium is as shown in the following reaction equation (1):

4 Li (I) + CS₂(g) → 2 Li₂S (s) + C (s) ...... (1)

For example, when the carbon compound is CF₄, during the heat treatment process, the substitution reaction with elemental lithium is as shown in the following reaction equation (2):

4 Li (I) + CF₄ (g) → 4 LiF (s) + C (s)...... (2)

For example, when the carbon compound is C₂F₄, during the heat treatment process, the substitution reaction with elemental lithium is as shown in the following reaction equation (3):

4 Li (I) + C₂F₄ (g) → 4 LiF (s) + 2 C (s) ...... (3)

For example, when the carbon compound is CO₂, during the heat treatment process, the substitution reaction with elemental lithium is as shown in the following reaction equation (4):

4 Li (I) + CO₂ (g) → 2 Li₂O (s) + C (s) ...... (4)

In the embodiments, when the carbon compound is in a gaseous state, such as including at least one gaseous compound of CS₂, CO₂, CF₄, and C₂F₄ (where CS₂ is a liquid, it is carried by the carrier gas Ar into the tube furnace, and apparently it may also be gasified and then fed), the carbon compound contacts the elemental lithium at a certain flow rate to perform the heat treatment. When the carbon compound is in a non-gaseous state, it may be vaporized to form a gaseous state, and then the gaseous carbon compound contacts the elemental lithium at a certain flow rate to perform the heat treatment. In a further embodiment, the flow rate of the gaseous carbon compound is 10 sccm-100 sccm. In specific embodiments, the flow rate may be a typical but not-limiting flow rate such as 10 sccm, 20 sccm, 30 sccm, 40 sccm, 50 sccm, 60 sccm, 70 sccm, 80 sccm, 90 sccm, 100 sccm, etc. By utilizing a gaseous carbon compound to perform a substitution reaction with elemental lithium and controlling the flow rate of the carbon compound, the generated carbon is coated in the form of graphene on the surface of the core body 10 containing the binary lithium-supplementing material with a molecular formula of LiₐX_{b} to form a graphene coating layer. The uniformity of the core-shell cathode lithium-supplementing additive particles is improved, and the capacity and lithium supplementing effect, as well as storage stability and processing stability, of the core-shell cathode lithium-supplementing additive are enhanced.

Apparently, the conductive carbon layer may also be formed by in-situ growth.

Therefore, the method for preparing the core-shell cathode lithium-supplementing additive in the above embodiments can form the core body 10 containing the binary lithium-supplementing material and the isolating conductive packaging layer 20 containing the conductive carbon layer in a single step, so that the isolating conductive packaging layer 20 containing the conductive carbon layer can be coated in situ on the surface of the lithium-supplementing core body 10, thereby endowing the prepared core-shell cathode lithium-supplementing additive with rich lithium, high purity, high capacity, good lithium-supplementing effect, and good storage stability and processing stability. In addition, the method for preparing the core-shell cathode lithium-supplementing additive can ensure that the prepared core-shell cathode lithium-supplementing additive has stable structure and electrochemical performance, and high efficiency, and saves production costs.

In another aspect, an embodiment of the present application provides a cathode lithium-supplementing additive. The cathode lithium-supplementing additives in the embodiment of the present application include the core-shell cathode lithium-supplementing additive in the embodiments of the present application. The cathode lithium-supplementing additive may be the core-shell cathode lithium-supplementing additive of the above embodiments, apparently, it may further include other additives suitable for the cathode, or auxiliary additives that is conductive to the lithium supplementing function of the core-shell cathode lithium-supplementing additive of the above embodiments. When other additives are included, the ratio between the core-shell cathode lithium-supplementing additive and the additives may be adjusted according to the actual needs in application. Since the cathode lithium-supplementing additive contains the core-shell cathode lithium-supplementing additive of the above embodiments, the cathode lithium-supplementing additive, as a lithium source in the charging and discharging processes, can be used as a "sacrificial agent" during the first cycle of charging to supplement the irreversible lithium-ions consumption caused by the formation of the SEI film on the anode, thereby maintaining the abundance of lithium ions in the battery system and improving the first cycle efficiency and overall electrochemical performance of the battery.

In yet another aspect, an embodiment of the present application provides a cathode material. The cathode material in the embodiment of the present application includes a lithium-supplementing additive. The lithium-supplementing additive is the core-shell cathode lithium-supplementing additive of the above embodiments or the cathode lithium-supplementing additive of the above embodiments. Apparently, the cathode material may also include cathode materials in the field of lithium-ion batteries. Since the cathode material of the embodiment of the present application contains the above-mentioned core-shell cathode lithium-supplementing additive of the embodiments of the present application, therefore, core-shell cathode lithium-supplementing additive of the material, as a lithium source in the charging and discharging processes, can be used as a "sacrificial agent" during the first cycle of charging to supplement the irreversible lithium-ions consumption caused by the formation of the SEI film on the anode, thereby maintaining the abundance of lithium ions in the battery system and improving the first cycle efficiency and overall electrochemical performance of the battery.

In the embodiments, the content of the core-shell cathode lithium-supplementing additive in the cathode material of the above embodiment is 0.1 wt%-10wt%. By controlling and optimizing the content of the core-shell cathode lithium-supplementing additive in the cathode material, the core-shell cathode lithium-supplementing additive can be improved to fully exert its above-mentioned effects.

At the same time, based on the cathode material of the embodiment of the present application, an embodiment of the present application also provides a cathode and a lithium battery containing the cathode of the embodiment of the present application.

The active material contained in the cathode is the above-mentioned cathode material in the embodiment of the present application. The cathode may be a conventional cathode for lithium batteries, such as including a current collector and a cathode active layer bonded to the surface of the current collector.

The cathode current collector includes but is not limited to any one of a copper foil and an aluminum foil.

The cathode active layer contains the above-mentioned cathode material of the embodiment of the present application, that is, it contains the lithium-supplementing additive, specifically, the above-mentioned core-shell cathode lithium-supplementing additive or the above-mentioned cathode lithium-supplementing additive of the embodiment of the present application. In the embodiment, the mass content of the lithium-supplementing additive, namely the above-mentioned core-shell cathode lithium-supplementing additive or the above-mentioned cathode lithium-supplementing additive of the embodiment of the present application, in the cathode active layer is 0.1 wt%-10 wt%, specifically, the content may be 0.1 wt%, 0.2 wt%, 0.3wt%, 0.4 wt%, 0.5 wt%, 1 wt%, 2 wt%, 3 wt%, 4wt%, 5 wt%, 6wt%, 7 wt%, 8 wt%, 9 wt%, 10 wt%, etc., preferably 0.1 wt%-10 wt%, preferably 0.2 wt%-5 wt%, more preferably 2 wt%-3 wt%, 0.5 wt%-2.5 wt%, etc.

The cathode active layer includes, in addition to the lithium-supplementing additive, a cathode active material, a binder and a conductive agent.

In the embodiment, the cathode active material includes at least one of lithium cobalt oxide, lithium iron phosphate, lithium iron manganese phosphate, lithium manganate, lithium nickel cobalt manganate, and lithium nickel manganate.

In the embodiment, the content of the binder in the cathode active layer is 0.1 wt%-30 wt%, and further may be 2 wt%-4 wt%. In specific embodiments, the content of the binder may be a typical but not-limiting content such as 0.1 wt.%, 0.5 wt%, 1 wt%, 5 wt%, 10 wt%, 15 wt%, 20 wt%, 25 wt%, etc. In specific embodiments, the binder includes one or more of polyvinylidene chloride, soluble polytetrafluoroethylene, styrene-butadiene rubber, hydroxypropyl methylcellulose, methylcellulose, carboxymethylcellulose, polyvinyl alcohol, acrylonitrile copolymer, sodium alginate, chitosan and chitosan derivatives.

In the embodiment, the content of the conductive agent in the cathode active layer is 0.1 wt%-30 wt%, and further may be 3 wt%-5 wt%. In specific embodiments, the content of the conductive agent may be a typical but not-limiting content such as 0.1 wt%, 0.5 wt%, 1 wt%, 5 wt%, 10 wt%, 15 wt%, 20 wt%, 25 wt%, etc. In specific embodiments, the conductive agent includes one or more of graphite, carbon black, acetylene black, graphene, carbon fiber, C60 and carbon nanotubes.

In the embodiment, the preparation process of the cathode is as follows: the cathode active material, lithium-supplementing additive, conductive agent and binder are mixed to obtain an electrode slurry, and the electrode slurry is coated on the current collector, followed by drying, rolling, and die-cutting to obtain the cathode plate.

Herein, the lithium battery in the embodiment of the present application contains the cathode. Apparently, the lithium battery in the embodiment of the present application also has necessary components such as the anode, separator, and electrolyte required for a lithium battery.

In addition, the lithium battery in the embodiment of the present application may be a lithium-ion battery or a lithium metal battery.

Since the cathode contains the core-shell cathode lithium-supplementing additive or the cathode lithium-supplementing additive of the above embodiments of the present application, during the first cycle of charging of the lithium battery according to embodiment of the present application, the cathode contains the above lithium-supplementing additive as a "sacrificial agent", so that as much lithium ions are released at once as possible to compensate for the irreversible lithium-ions consumption caused by formation of the SEI film on the anode, thereby maintaining sufficient lithium in the lithium battery system of the embodiment of the present application and improving the performance and overall electrochemical performance such as efficiency and capacity as well as cycle performance of the lithium battery of the embodiment of the present application.

The core-shell cathode lithium-supplementing additive and the preparation method and application according to the embodiments of the present application are exemplified by the following examples.

### 1. Core-shell cathode lithium-supplementing additive and the preparation method

### Example A1

This example provides a core-shell cathode lithium-supplementing additive and a preparation method thereof. The core-shell cathode lithium-supplementing additive includes a core body containing Li₃N and a coating layer of conductive carbon covering the core body.

The method for preparing the core-shell cathode lithium-supplementing additive in this example included the following steps S1-S2:
In step S1: metallic lithium was placed in an atmosphere furnace with continuous flow of nitrogen gas, the temperature was raised from room temperature to 400°C and held at a constant temperature for 12 hours to obtain particles of Li₃N (LN1) core material;
In step S2: after the constant temperature was completed, the material was mixed with a carbon source and the temperature was directly raised to 700°C and held constant for 1.5 hours to obtain a LNP1 material encapsulated with the conductive carbon layer.

After analyzing, the particle size of the particles of Li₃N core material contained in the core-shell cathode lithium-supplementing additive of this example was about 100 nm, the thickness of the conductive carbon layer was about 50 nm, and the D50 of the core-shell cathode lithium-supplementing additive was about 5 µm.

### Example A2

This example provides a core-shell cathode lithium-supplementing additive and a preparation method thereof. The core-shell cathode lithium-supplementing additive includes a core body containing Li₃N and a coating layer of conductive carbon covering the core body.

The method for preparing the core-shell cathode lithium-supplementing additive in this example included the following steps S1-S2:

In step S1: metallic lithium was placed in an atmosphere furnace with continuous flow of nitrogen gas, the temperature was raised from room temperature to 150°C and held constant for 16 hours to obtain particles of Li₃N (LN2) core material;

In step S2: the particles of Li₃N (LN2) core material were evenly mixed with a sucrose carbon source and placed in an atmosphere furnace with continuous flow of nitrogen gas, and the temperature was raised from room temperature to 700°C and kept constant for 4 hours to obtain the LNP2 material encapsulated with the conductive carbon layer.

After analyzing, the particle size of the particles of Li₃N core material contained in the core-shell cathode lithium-supplementing additive of this example was about 200 nm, the thickness of the conductive carbon layer was about 100 nm, and the D50 of the core-shell cathode lithium-supplementing additive was about 5 µm.

### Example A3

This example provides a core-shell cathode lithium-supplementing additive and a preparation method thereof. The core-shell cathode lithium-supplementing additive includes a core body containing Li₃N and an oxide coating layer covering the core body.

The method for preparing the core-shell cathode lithium-supplementing additive in this example included the following steps S1-S2:
In step S1: metallic lithium was placed in an atmosphere furnace with continuous flow of nitrogen gas, the temperature was raised from room temperature to 800°C and held constant for 8 hours to obtain particles of Li₃N (LN3) core material;
In step S2: SnO₂ was used as the target material, a SnO₂ layer was deposited on the surface of the particles of LN3 core material by magnetron sputtering to obtain an LNP3 material encapsulated with a conductive SnO₂ oxide layer.

After analyzing, the particle size of the particles of Li₃N core material contained in the core-shell cathode lithium-supplementing additive of this example was about 50 nm, the thickness of the conductive SnO₂ oxide layer was about 20 nm, and the D50 of the core-shell cathode lithium-supplementing additive was about 2 µm.

### Example A4

This example provides a core-shell cathode lithium-supplementing additive and a preparation method thereof. The core-shell cathode lithium-supplementing additive includes a core body containing Li₃N and an oxide coating layer covering the core body.

The method for preparing the core-shell cathode lithium-supplementing additive in this example included the following steps S1-S3:
In step S1: lithium sulfide was evenly mixed with metallic lithium and placed in an atmosphere furnace with continuous flow of nitrogen gas, the temperature was raises from room temperature to 400°C and held constant for 12 hours to obtain particles of Li_{2.5}N_{0.5}S_{0.5} (LNS4) core material;
In step S2: after the constant temperature is completed, the particles were mixed with a carbon source and the temperature was directly raised to 700°C and held constant for 1.5 hours to obtain the LNS4P1 material encapsulated with a conductive carbon layer;
In step S3: SnO₂ was used as the target material, a SnO₂ layer was deposited on the surface of the particles of LNS4P1 material encapsulated with the conductive carbon layer obtained in step S2 by magnetron sputtering to obtain LNS4P2 material encapsulated with the conductive SnO₂ oxide layer.

After analyzing, the D50 of the core-shell cathode lithium-supplementing additive was about 5 µm.

### Comparative example A1

Li₃N (LN1) material was prepared according to step S1 of Example A1.

### Comparative example A2

Li_{2.5}N_{0.5}S_{0.5} (LNS4) material was prepared according to step S1 of Example A4.

**Example A5**

This example provides a core-shell cathode lithium-supplementing additive and a preparation method thereof. The core-shell cathode lithium-supplementing additive includes a core body containing LiF and a graphene coating layer covering the core body.

The method for preparing the core-shell cathode lithium-supplementing additive in this example included the following steps:

a lithium foil was placed in a tube furnace and heated to 600°C, and then CF₄ gas was introduced at a flow rate of 20 sccm when the lithium was in a molten state, the substitution reaction shown in the above chemical reaction equation (2) took place between the two to generate LiF nanoparticles, and the generated carbon was coated on the surface of the LiF nanoparticles as a graphene layer.

After analyzing, the particle size of the LiF nanoparticles contained in the core-shell cathode lithium-supplementing additive in this example is 50 nm, the thickness of the graphene layer was 8 nm, the D50 of the core-shell cathode lithium additive was 0.9 µm.

### Example A6

This example provides a core-shell cathode lithium-supplementing additive and a preparation method thereof. The core-shell cathode lithium-supplementing additive includes a core body containing LiF and a graphene coating layer covering the core body.

The method for preparing the core-shell cathode lithium-supplementing additive in this example included the following steps:
a lithium foil was placed in a tube furnace and heated to 600°C, and then C₂F₄ gas was introduced at a flow rate of 25 sccm when the lithium was in a molten state, the substitution reaction shown in the above chemical reaction equation (3) took place between the two to generate LiF nanoparticles, and the generated carbon was coated on the surface of the LiF nanoparticles as a graphene layer.

After analyzing, the particle size of the LiF nanoparticles contained in the core-shell cathode lithium-supplementing additive in this example was 55 nm, the thickness of the graphene layer was 9 nm-10 nm, the D50 of the core-shell cathode lithium additive was 1 µm.

### Example A7

This example provides a core-shell cathode lithium-supplementing additive and a preparation method thereof. The core-shell cathode lithium-supplementing additive includes a core body containing Li₂S and a graphene coating layer covering the core body.

The method for preparing the core-shell cathode lithium-supplementing additive in this example included the following steps:

a lithium foil was placed in a tube furnace and heated to 600°C, and then CS₂ gas (including carrier gas of argon) was introduced at a flow rate of 40 sccm when the lithium was in a molten state, the substitution reaction shown in the above chemical reaction equation (3) took place between the two to generate Li₂S nanoparticles, and the generated carbon was coated on the surface of Li₂S nanoparticles as a graphene layer.

After analyzing, the particle size of the Li₂S nanoparticles contained in the core-shell cathode lithium-supplementing additive in this example was 35 nm, the thickness of the graphene layer was 5 nm, the D50 of the core-shell cathode lithium additive was 1.5 µm.

### Example A8

This example provides a core-shell cathode lithium-supplementing additive and a preparation method thereof. The core-shell cathode lithium-supplementing additive includes a core body containing Li₂O and a graphene coating layer covering the core body.

The method for preparing the core-shell cathode lithium-supplementing additive in this example included the following steps:
a lithium foil was placed in a tube furnace and heated to 500°C, and then CO₂ gas was introduced at a flow rate of 50 sccm when the lithium was in a molten state, the substitution reaction shown in the above chemical reaction equation (3) took place between the two to generate Li₂O nanoparticles, and the generated carbon was coated on the surface of the Li₂O nanoparticles as a graphene layer.

After analyzing, the particle size of the Li₂O nanoparticles contained in the core-shell cathode lithium-supplementing additive in this example was 60 nm, the thickness of the graphene layer was 15 nm, the D50 of the core-shell cathode lithium additive was 1.3 µm.

### Example A9

This example provides a core-shell cathode lithium-supplementing additive and a preparation method thereof. The core-shell cathode lithium-supplementing additive includes a core body containing LiF, a graphene coating layer coating the core body, and an amorphous carbon coating layer coating the graphene coating layer.

The method for preparing the core-shell cathode lithium-supplementing additive in this example included the following steps S1-S2:
in step S1: graphene-coated LiF particles were prepared according to the method of Example A1;
in step S2: the graphene-coated LiF particles and a carbon source were placed in a nitrogen protective atmosphere at a temperature of 700°C, held at a constant temperature for 1.5 hour to form an amorphous carbon coating layer on the surface of the graphene coating layer, and the core-shell cathode lithium-supplementing additive of LiF@graphene@amorphous carbon was obtained.

After analyzing, the thickness of the amorphous carbon coating layer of the core-shell cathode lithium-supplementing additive in this example was 12 nm, and the D50 of the core-shell cathode lithium-supplementing additive was 1 µm.

### Example A10

This example provides a core-shell cathode lithium-supplementing additive and a preparation method thereof. The core-shell cathode lithium-supplementing additive includes a core body containing LiF, a graphene coating layer coating the core body, and an amorphous carbon coating layer coating the graphene coating layer.

The method for preparing the core-shell cathode lithium-supplementing additive in this example included the following steps S1-S2:
in step S1: graphene-coated LiF particles were prepared according to the method of Example A2;
in step S2: the particles of LiF core material were evenly mixed a sucrose carbon source and placed in an atmosphere furnace with continuous flow of nitrogen gas, and the temperature was raised from room temperature to 700°C and held constant for 4 hours to form an amorphous carbon coating layer on the surface of the graphene coating layer, and the core-shell cathode lithium-supplementing additive of LiF@graphene@amorphous carbon was obtained.

After analyzing, the thickness of the amorphous carbon coating layer was 10 nm, and the D50 of the core-shell cathode lithium-supplementing additive was 1.1 µm.

### Example A11

This example provides a core-shell cathode lithium-supplementing additive and a preparation method thereof. The core-shell cathode lithium-supplementing additive includes a core body containing Li₂S, a graphene coating layer coating the core body, and a SnO₂ coating layer coating the graphene coating layer.

The method for preparing the core-shell cathode lithium-supplementing additive in this example included the following steps S1-S2:

in step S1: graphene-coated Li₂S particles were prepared according to the method of Example A3;
in step S2: SnO₂ was used as the target material, a SnO₂ layer was deposited on the surface of the graphene coating layer using magnetron sputtering to obtain the LNP material encapsulated with the conductive SnO₂ oxide layer, and the core-shell cathode lithium-supplementing additive of Li₂S@graphene@SnO₂ was obtained.

After analyzing, the thickness of the conductive SnO₂ oxide layer contained in the core-shell cathode lithium-supplementing additive in this example was 7 nm, and the D50 of the core-shell cathode lithium-supplementing additive was 0.8 µm.

### Comparative Example A3

A binary Li₂O lithium-supplementing material was provided.

**Comparative Example A4**

This comparative example provides a core-shell cathode lithium-supplementing additive. Compared with Example A2, the coating layer is an amorphous carbon layer.

The method for preparing the core-shell cathode lithium-supplementing additive of this comparative example included the following steps:

LiF nanoparticles were provided, and the nanoparticles were mixed with a carbon source binder and granulated, and then carbonized to form a carbon-source-binder-formed amorphous carbon coating layer covering the LiF nanoparticles.

### 2. Examples of lithium-ion battery

The above-mentioned core-shell cathode lithium-supplementing additives provided in the Example A1 to Example A11 and the core-shell cathode lithium-supplementing additives provided in Comparative Example A1 to Comparative Example A4 were respectively prepared into cathodes and assembled into lithium-ion batteries according to the following methods.

Cathode: the lithium-supplementing additive and lithium cobalt oxide were mixed at a mass ratio of 5:95 to obtain a subject material, the subject material was mixed with SP:PVDF at a mass ratio of 95:2:3, ball milled and stirred for 60 minutes at a rotation speed of 30 Hz, and followed by homogenization-coating-drying-slitting to prepare a respective cathode plate. The cathode plate was baked in a vacuum oven at100°C to remove traces of water.

### Anode: lithium metal sheet with a diameter of 16 mm was used.

Electrolyte: 1 mol/L LiPF₆ solution, the solvent was composed of EC (ethylene carbonate) and DEC (diethyl carbonate) at a volume ratio of 1:1.

Separator: polypropylene microporous separator.

Assembly of lithium-ion battery: the lithium-ion battery was assembled in an inert atmosphere glove box according to the assembly sequence of lithium metal sheetseparator-electrolyte-cathode plate.

### Relevant characteristics testing

### 1. Characterization of core-shell cathode lithium-supplementing additives

1.1 Electron microscopy analysis of the core-shell cathode lithium-supplementing additives and the cores contained therein from the examples.

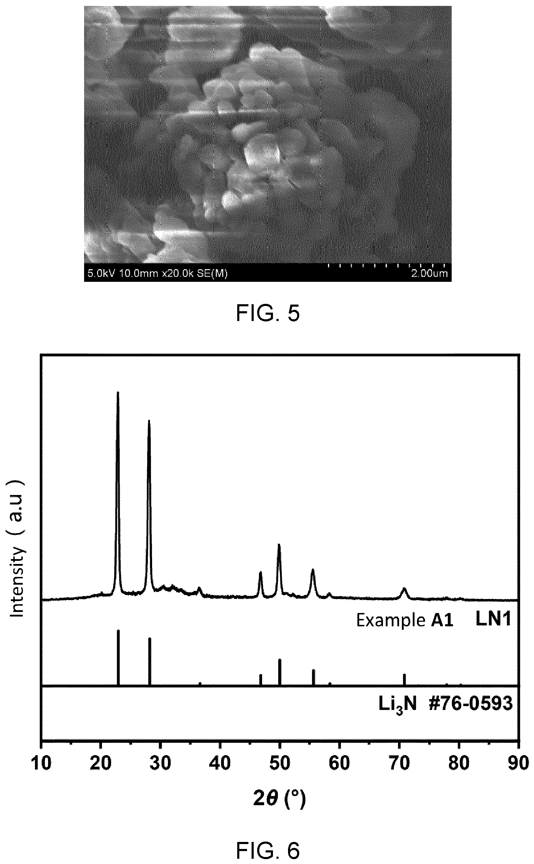

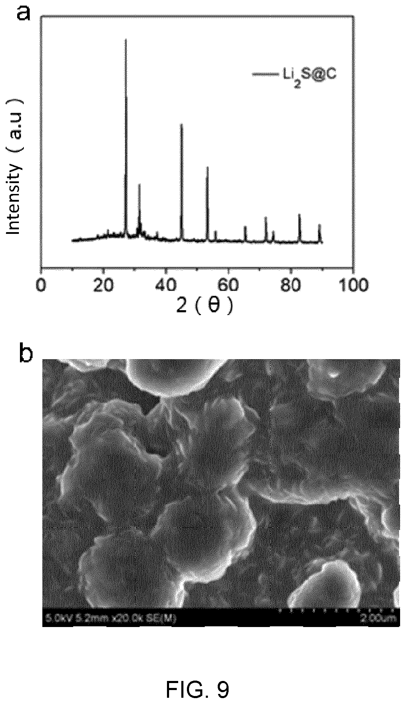

The core-shell cathode lithium-supplementing additives and part of the core bodies prepared in the above examples were subjected to electron microscopy analysis. The SEM image of the LNP1 core-shell cathode lithium-supplementing additive in Example 1 is shown in FIG. 4, and the SEM image of the LN1 core body of the LNP1 core-shell cathode lithium-supplementing additive in Example 1 is shown in FIG. 5. The SEM image of Li₂S@C provided in Example A7 is shown in FIG. 9b. It can be seen from FIG. 5 that the core body of the core-shell cathode lithium-supplementing additive has a secondary structure and contains pores in the core body. The SEM images of the core-shell cathode lithium-supplementing additives prepared in other examples are shown in FIG. 4 and FIG. 9b. It can be seen from the SEM images of FIG. 4, FIG. 5 and FIG. 9b that the conductive carbon layer structure encapsulates the secondary particles of the core, providing a dense protection of the core material and preventing moisture and CO₂ in the environment from direct contact with the core material to cause deterioration. The conductive carbon layer acts as a conductive medium to promote electron transport; at the same time, the carbon layer outer shell can remain in its original state after the core reaction is completed, providing structural support to the electrode system. The porous secondary structure of the core helps lithium ion migration, while leaving a buffer space for the delithiation and gas generation of the core material.

1.2 X-ray diffraction (XRD) analysis of the core-shell cathode lithium-supplementing additives in the examples.

The LN1 core body prepared in the above Example A1 was subjected to XRD analysis, and the XRD pattern is shown in FIG. 6. The SEM image of Li₂S@C provided in Example A7 is shown in FIG. 9a. It can be seen from FIG. 6 that the LN1 core body completely matches the PDF standard 76-0593 of Li₂N, indicating that the Li₂N provided by Example A1 has high purity. It can be seen from FIG. 9a that the core-shell cathode lithium-supplementing additive provided in Example A7 is indeed Li₂S (XRD pattern).

XRD patterns of the core-shell cathode lithium supplemental additives provided in other examples all show corresponding characteristic peaks.

It can be found from the XRD and SEM analysis of the core-shell cathode lithium-supplementing additives of Example A1 to Example A11 that the core-shell cathode lithium-supplementing additives provided in the examples of the present application can obtain the corresponding core bodies and coating layer materials and have stable structure.

1.3. Raman spectrum analysis of the core-shell cathode lithium-supplementing additives in the examples:

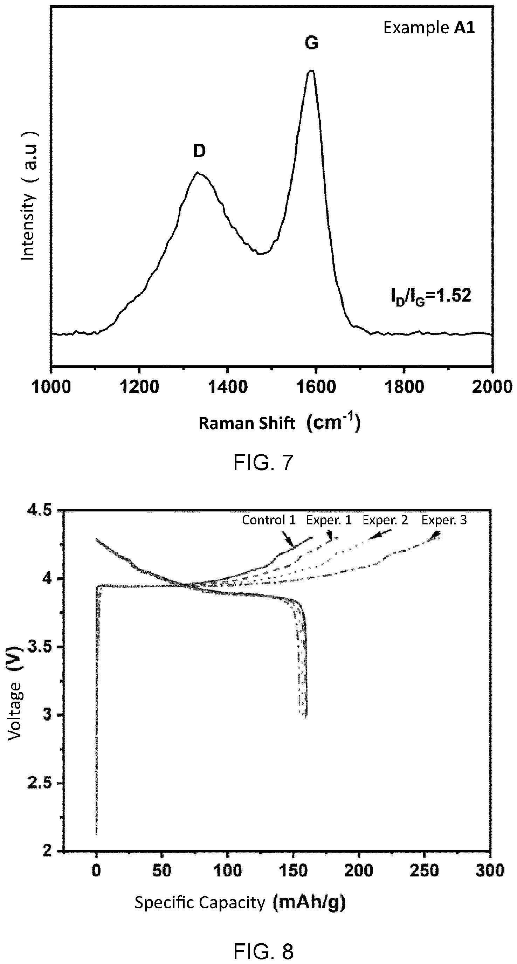

The core-shell cathode lithium-supplementing additive in the above Example A1 was subjected to Raman spectrum analysis, and the Raman spectrum is shown in FIG. 7. From the Raman spectrum in FIG. 6, it can be seen that there are scattering peaks at wavelengths of 1330 cm⁻¹ and 1580 cm⁻¹. The intensities at the wavelengths of 1330 cm⁻¹ and 1580 cm⁻¹ are recorded as I_{D} and I_{G} respectively, and I_{D} and I_{G} satisfy: I_{D}/I_{G} < 5.0.

### 2. Electrochemical performance of lithium-ion batteries:

The lithium secondary batteries containing the core-shell cathode lithium-supplementing additives of Examples A1 to A11 and the core-shell cathode lithium-supplementing additives of Comparative Examples A1 to A4 were tested. The test conditions are as follows,

the batteries were charged to 4.3 V at a rate of 0.05 C with constant current and voltage, and the cut-off current was 0.02 C; the batteries were left for 5 minutes and then discharged at a rate of 0.05 C with a constant current to 3.0 V.

the results of the relevant electrochemical performance test of the lithium secondary batteries are shown in Table 1 below. The electrochemical performances of Experimental Group 6 to Experimental Group 8 and Comparative Group 1 are shown in FIG. 8:

**Table 1**

| **Subject material** | **First charge specific capacity** mAh/g | **First cycle efficiency** | **Specific capacity increased** |
|---|---|---|---|
| 94% LCO + 1% core-shell cathode lithium-supplementing additive (LNP1) from Example A1 | 183.9 | 86.62% | 19.4 mAh/g |
| (Experimental Group 1) | | | |
| 92.5% LCO+2.5% core-shell cathode lithium-supplementing additive (LNP1) from Example A1 | 212.6 | 74.08% | 48.1 mAh/g |
| (Experimental Group 2) | | | |
| 90% LCO+5% core-shell cathode lithium-supplementing additive (LNP1) from Example A1 | 261.8 | 59.09% | 97.3 mAh/g |
| (Experimental Group 3) | | | |
| 92.5% LCO+ 2.5% core-shell cathode lithium-supplementing additive (LNP2) from Example A2 | 210.8 | 74.43% | 46.3 mAh/g |
| (Experimental Group 4) | | | |
| 92.5% LCO+ 2.5% core-shell cathode lithium-supplementing additive (LNP3) from Example A3 | 206.5 | 76.42% | 42.0 mAh/g |
| (Experimental Group 5) | | | |
| 92.5% LCO+ 2.5% core-shell cathode lithium-supplementing additive (LNS4P2) from Example A4 | 195.9 | 80.86 | 37.5 mAh/g |
| (Experimental Group 6) | | | |
| 95% LCO (Control Group 1) | 164.5 | 97.33% | - |
| 92.5% LCO+ 2.5% core of cathode lithium additive (LN1) from Comparative Example A1 | 170.4 | 91.02% | 15.3 mAh/g |
| (Control Group 2) | | | |
| 92.5% LCO+ 2.5% core of cathode lithium additive (LNS4) from Comparative Example A2 | 168.0 | 92.98% | 11.8 mAh/g |
| (Control Group 3) | | | |
| 90% LCO + 5% core-shell cathode lithium-supplementing additive from Example A5 | 166.3 | 80.1 | 17.5 |
| (Experimental Group 7) | | | |
| 90% LCO + 5% core-shell cathode lithium-supplementing additive from Example A6 | 168.7 | 78.9 | 19.9 |
| (Experimental Group 8) | | | |
| 90% LCO + 5% core-shell cathode lithium-supplementing additive from Example A7 | 191.5 | 70.3 | 42.7 |
| (Experimental Group 9) | | | |
| 90% LCO + 5% core-shell cathode lithium-supplementing additive from Example A8 | 171.7 | 79.1 | 22.9 |
| (Experimental Group 10) | | | |
| 90% LCO + 5% Example A9 core-shell cathode lithium-supplementing additive (Experimental Group 11) | 167.8 | 80.3 | 19.0 |
| 90% LCO + 1% core-shell cathode lithium-supplementing additive from Example A6 | 165.3 | 84.0 | 16.5 |
| (experimental group 12) | | | |
| 90% LCO + 5% Example A11 core-shell cathode lithium-supplementing additive (Experimental Group 13) | 189.4 | 72.2 | 40.6 |
| 95% LCO+ 0% LNP (Control Group 4) | 148.8 | 90.9 | / |
| 90% LCO+5% core-shell cathode lithium-supplementing additive from Comparative Example A3 | 159.7 | 85.0 | 10.9 |
| (Control Group 5) | | | |
| 90% LCO+5% core-shell cathode lithium-supplementing additive from Comparative Example A4 | 158.1 | 85.3 | 9.3 |
| (Control Group 6) | | | |

In Control Group 1, the first charge specific capacity of the 95% LCO cathode was 164.5 mAh/g, the first discharge specific capacity was 160.1 mAh/g, and the first cycle efficiency was 97.33%.

In Experimental Group 1, the first charge specific capacity of the 94% LCO + 1% LNP cathode was 183.9 mAh/g, the first discharge specific capacity was 159.3 mAh/g, and the first cycle efficiency was 86.62%; the specific capacity of LNP1 was about 2005 mAh/g, and the specific capacity increased for the first charging of the cathode was 19.4 mAh/g.

In Experimental Group 2, the first charge specific capacity of the 92.5% LCO+ 2.5% LNP cathode was 212.6 mAh/g, the first discharge specific capacity was 157.5 mAh/g, and the first cycle efficiency was 74.08%; the specific capacity of LNP1 was about 1992 mAh/g, and the specific capacity increased for the first charging of the cathode was 48.1 mAh/g.

In Experimental Group 3, the first charge specific capacity of the 90% LCO+ 5% LNP cathode was 261.8 mAh/g, the first discharge specific capacity was 154.7 mAh/g, the first cycle efficiency was 59.09%; the specific capacity of LNP1 was about 2013 mAh/g, and the specific capacity increased for the first charging of the cathode was 97.3 mAh/g.

In Experimental Group 4, the first charge specific capacity of the 92.5% LCO+ 2.5% LNP cathode was 210.8 mAh/g, the first discharge specific capacity was 156.9 mAh/g, and the first cycle efficiency was 74.43%; the specific capacity of LNP2 was about 1925 mAh/g, and the specific capacity increased for the first charging of the cathode was 46.3 mAh/g.

In Experimental Group 5, the first charge specific capacity of the 92.5% LCO+ 2.5% LNP cathode was 206.5 mAh/g, the first discharge specific capacity was 157.8 mAh/g, and the first cycle efficiency was 76.42%; the specific capacity of LNP3 was about 1762 mAh/g, and the specific capacity increased for the first charging of the cathode was 42.0 mAh/g.

In Experimental Group 6, the first charge specific capacity of the 92.5% LCO+ 2.5% LNP cathode was 195.9 mAh/g, the first discharge specific capacity was 158.4 mAh/g, and the first cycle efficiency was 80.86%; the specific capacity of LNS4P2 was about 1356 mAh/g, and the specific capacity increased for the first charging of the cathode was 37.5 mAh/g.

In Control Group 2, the first charge specific capacity of the 92.5% LCO+ 2.5% LNP cathode was 170.4 mAh/g, the first discharge specific capacity was 155.1 mAh/g, and the first cycle efficiency was 91.02%; the specific capacity of LN1 was about 387 mAh/g, and the specific capacity increased for the first charging of the cathode was 15.3 mAh/g.

In Control Group 3, the first charge specific capacity of the 92.5% LCO+ 2.5% LNP cathode was 168.0 mAh/g, the first discharge specific capacity was 156.2 mAh/g, and the first cycle efficiency was 92.98%; the specific capacity of LNS4 was about 297 mAh/g, and the specific capacity increased for the first charging of the cathode was 11.8 mAh/g.

In the Li₂S-based lithium-supplementing materials, the first charge specific capacity in Examples A7 and A11 is greater than that in Comparative Examples A3 and A4. In the LiF-based lithium-supplementing materials, the first charge specific capacity in Examples A5, A6, A9, and A10 is greater than that in Comparative Example A4; in the Li₂O-based lithium-supplementing materials, the first charge specific capacity in Example A8 is greater than that in Comparative Example A3. The above results show that for binary lithium-supplementing additives of the same type, the core-shell lithium-supplementing additive prepared by substitution reaction can release more lithium ions during the first charging, thereby supplementing the irreversible capacity loss of the anode during the first cycle as much as possible, with less consumption of lithium ions in the cathode material. The excellent performance of the examples results from the core-shell structure and the smaller core particle size.

As can be seen from Table 1, after utilizing the cathode lithium-supplementing additive, the first charge specific capacity of the subject cathode material is significantly increased, while the discharge specific capacity is substantially unaffected, so as to supplement lithium ions and reduce the first cycle efficiency of the cathode. The higher the proportion of cathode lithium-supplementing additives employed, the greater the increased in the first charge specific capacity, and the greater the reduction in the first cycle efficiency, and the more significant the lithium supplementing effect is, while at the same time, the proportion of cathode active materials will also decrease.

In the comparative examples, which the cathode lithium-supplementing additive without a conductive packaging layer was used, although there is a certain lithium supplementing effect, it is not significant. This is due to the deterioration of the cathode lithium-supplementing additive during the manufacturing process of the batteries, which shows that the cathode lithium-supplementing additive encapsulated with a conductive layer can greatly improve the material processibility and stability so as to exhibit the lithium-supplementing ability of the material.

The above are only preferred embodiments of the present application and are not intended to limit the present application. Any modifications, equivalent substitutions and improvements made within the spirit and principles of the present application shall be included in the scope of protection of the present application.

## Claims

1. A core-shell cathode lithium-supplementing additive, comprising a core body and a coating layer covering the core body, wherein the coating layer is an isolating conductive packaging layer, the core body contains a lithium-supplementing material, and the lithium-supplementing material comprises Li_{2+c}A_{c}B_{1-c} or/and LiₐX_{b}; wherein, 0 ≤ c ≤ 1, A is at least one of N and P, B is at least one of S and O, 1 ≤ a ≤ 3, 1 ≤ b ≤ 3, and X is any one selected from F, S, N, B, P, O, and Se.

2. The core-shell cathode lithium-supplementing additive according to claim 1, wherein the core body is a primary particle or /and a secondary particle; and wherein a particle size of the primary particle is 50 nm-500 nm, and a particle size of the secondary particle is 0.1 µm-10 µm.

3. The core-shell cathode lithium-supplementing additive according to claim 1 or 2, wherein the Li_{2+c}A_{c}B_{1-c} comprises at least one of Li₂O, Li₂S, Li₃N, LisP, Li_{2+c}O_{c}S_{1-c}, Li_{2+c}N_{c}P_{1-c}, Li_{2+c}N_{c}S_{1-c}, Li_{2+c}N_{c}O_{1-c}, Li_{2+c}P_{c}S_{1-c}, and Li_{2+c}P_{c}O_{1-c}; and/or
the lithium-supplementing material is Li_{2+c}A_{c}B_{1-c}, and a mass content of the lithium-supplementing material in the core-shell cathode lithium-supplementing additive is 90%-99%.

4. The core-shell cathode lithium-supplementing additive according to claim 1 or 2, wherein the LiₐX_{b} comprises at least one of LiF, Li₂S, Li₃N, LisB, Li₂O, LisP, and Li₂Se; and/or
the lithium-supplementing material is LiₐX_{b}, and a mass content of the lithium-supplementing material in the core-shell cathode lithium-supplementing additive is 70%-90%.

5. The core-shell cathode lithium-supplementing additive according to claim 1, wherein the isolating conductive packaging layer comprises at least one layer of a conductive carbon layer and a conductive oxide layer; and/or
a total mass of the isolating conductive packaging layer accounts for 1%-10% of a mass of the core-shell cathode lithium-supplementing additive; and/or
a total thickness of the isolating conductive packaging layer is 1 nm-100 nm.

6. The core-shell cathode lithium-supplementing additive according to claim 5, wherein the lithium-supplementing material is LiₐX_{b}, the isolating conductive packaging layer comprises the conductive carbon layer, and the conductive carbon layer directly covers a surface of the core body.

7. The core-shell cathode lithium-supplementing additive according to claim 6, wherein the isolating conductive packaging layer further comprises another conductive coating layer, and the another conductive coating layer covers an outer surface of the conductive carbon layer.

8. The core-shell cathode lithium-supplementing additive according to claim 7, wherein the conductive carbon layer is a graphite coating layer; and/or
a thickness of the conductive carbon layer is 5 nm-20 nm; and/or
the another conductive coating layer comprises another conductive carbon layer and/or conductive oxide layer.

9. The core-shell cathode lithium-supplementing additive according to any one of claims 5 to 7, wherein a material of the conductive carbon layer comprises at least one of graphene, carbon nanotubes, amorphous carbon, graphite, and carbon black; and
a material of the conductive oxide layer comprises at least one of In₂O₃, ZnO, and SnO₂.

10. The core-shell cathode lithium-supplementing additive according to claim 9, wherein the isolating conductive packaging layer comprises a conductive carbon layer, and a Raman spectrum of the core-shell cathode lithium-supplementing additive has scattering peaks at wavelengths of 1330 cm⁻¹ and 1580 cm⁻¹, intensities of the scattering peaks at the wavelengths of 1330 cm⁻¹ and 1580 cm⁻¹ are recorded as I_{D} and I_{G}, respectively, and I_{D} and I_{G} satisfy: I_{D}/I_{G} < 5.0.

11. A preparation method for a core-shell cathode lithium-supplementing additive, comprising the following steps:
preparing particles containing a lithium-supplementing material, wherein the lithium-supplementing material of the particles containing the lithium-supplementing material comprises Li_{2+c}A_{c}B_{1-c} or/and LiₐX_{b}; wherein, 0 ≤ c ≤ 1, A is at least one of N and P, B is at least one of S and O, 1 ≤ a ≤ 3, 1 ≤ b ≤ 3, and X is any one selected from F, S, N, B, P, O, and Se; and
forming an isolating conductive packaging layer on a surface of the particles containing the lithium-supplementing material to obtain the core-shell cathode lithium-supplementing additive.

12. The preparation method according to claim 11, wherein the step of forming the isolating conductive packaging layer on the surface of the particles containing the lithium-supplementing material comprises a step of forming at least one layer of a conductive carbon layer and a conductive oxide layer on the surface of the particles containing the lithium-supplementing material.

13. The preparation method according to claim 11, wherein the lithium-supplementing material is LiₐX_{b}, the isolating conductive packaging layer comprises a conductive carbon layer, and the preparation method for the core-shell cathode lithium-supplementing additive comprises the following steps:
performing a heat treatment on a mixture including elemental lithium and a carbon compound containing element X in a protective atmosphere, so that the elemental lithium and the carbon compound undergo a substitution reaction to generate the lithium-supplementing material and the conductive carbon layer covering the lithium-supplementing-material in situ, so as to obtain the core-shell cathode lithium-supplementing additive.

14. The preparation method according to claim 13, wherein the carbon compound comprises at least one of CS₂, CO₂, CF₄, and C₂F₄; and/or
a temperature of the heat treatment is 250°C-700°C; and/or
the carbon compound is in a gaseous state, and is in contact with the elemental lithium at a certain flow rate to undergo the heat treatment; and/or
the method further comprises depositing another conductive coating layer on an outer surface of the conductive carbon layer.

15. The preparation method according to claim 14, wherein a flow rate of the carbon compound in a gaseous state is 10 sccm-100 sccm.

16. A cathode lithium-supplementing additive, comprising the core-shell cathode lithium-supplementing additive according to any one of claims 1 to 10, or a core-shell cathode lithium-supplementing additive prepared by the preparation method according to any one of claims 11 to 15.

17. A cathode material, comprising the core-shell cathode lithium-supplementing additive according to any one of claims 1 to 10, a core-shell cathode lithium-supplementing additive prepared by the preparation method according to any one of claims 11 to 15, or the cathode lithium-supplementing additive according to claim 9.

18. A cathode, comprising a current collector and a cathode active layer bonded to a surface of the current collector, wherein the cathode active layer comprises a cathode active material, a lithium-supplementing additive, a binder and a conductive agent; wherein the lithium-supplementing additive comprises the core-shell cathode lithium-supplementing additive according to any one of claims 1 to 10, a core-shell cathode lithium-supplementing additive prepared by the preparation method according to any one of claims 11 to 15, or the cathode lithium-supplementing additive according to claim 17.

19. The cathode according to claim 18, wherein a content of the lithium-supplementing additive in the cathode active layer is 0.1 wt%-10 wt%; and/or
a content of the conductive agent in the cathode active layer is 0.1 wt%-30 wt%; and/or
a content of the binder in the cathode active layer is 0.1 wt%-30 wt%.

20. A lithium battery, comprising a cathode, wherein the cathode is the cathode according to any one of claims 18 to 19.
